(19) **Europäisches Patentamt / European Patent Office / Office européen des brevets**

(11) **EP 1 889 754 B1**

(12) **EUROPÄISCHE PATENTSCHRIFT**

(45) Veröffentlichungstag und Bekanntmachung des Hinweises auf die Patenterteilung:
**05.01.2011 Patentblatt 2011/01**

(51) Int Cl.:
***B60R 21/01*** *(2006.01)*

(21) Anmeldenummer: **07112066.1**

(22) Anmeldetag: **09.07.2007**

(54) **Verfahren und Vorrichtung zur Ansteuerung von Personenschutzmitteln und Computerprogrammprodukt**

Method and device for actuating personal protection device and computer program product

Procédé et dispositif destinés à commander des moyens de protection des personnes et produit de programme informatique

(84) Benannte Vertragsstaaten:
**DE ES FR GB**

(30) Priorität: **17.08.2006 DE 102006038549**

(43) Veröffentlichungstag der Anmeldung:
**20.02.2008 Patentblatt 2008/08**

(73) Patentinhaber: **ROBERT BOSCH GMBH**
**70442 Stuttgart (DE)**

(72) Erfinder:
- **Kolatschek, Josef**
  **71263, Weil der Stadt (DE)**
- **Breuninger, Joerg**
  **71282, Hemmingen (DE)**

(56) Entgegenhaltungen:
**DE-A1- 10 360 893        DE-A1-102004 018 288**
**DE-A1-102005 060 055**

EP 1 889 754 B1

**Beschreibung**

Stand der Technik

Die Erfindung betrifft ein Verfahren und eine Vorrichtung zur Ansteuerung von Personenschutzmitteln, sowie ein Computerprogramm bzw. ein Computerprogrammprodukt nach der Gattung der unabhängigen Patentansprüche.
Aus DE 103 60 893 A1 ist bereits ein Verfahren zur Ansteuerung von Personenschutzmitteln bekannt. Dabei wird aus einem Signal eines Beschleunigungssensors eine Vorverlagerung bestimmt, die mit wenigstens einem Schwellwert verglichen wird, der in Abhängigkeit von einem Geschwindigkeitsabbau und einer Verzögerung eingestellt wird. In Abhängigkeit von dem Vergleich werden die Personenschutzmittel angesteuert. Weiterhin ist aus dieser Schrift, und zwar aus den Angaben zum Stand der Technik, bekannt, dass es bereits ein weiteres Verfahren zur Ansteuerung von Personenschutzmitteln gibt, bei dem in Abhängigkeit von den Crashvorgang charakterisierenden Parametern eine variable Schwelle für einen integrierten Beschleunigungswert eingestellt wird. Damit kann sehr genau auf den Crashverlauf und damit auf die Crashtypen bzw. die Crashschwere eingegangen werden. Insbesondere wird die variable Schwelle in Abhängigkeit von der Beschleunigung bestimmt und gegen diese Schwelle der Geschwindigkeitsabbau geprüft.

Offenbarung der Erfindung

Das erfindungsgemäße Verfahren zur Ansteuerung von Personenschutzmitteln bzw. die erfindungsgemäße Vorrichtung zur Ansteuerung von Personenschutzmitteln mit den Merkmalen der unabhängigen Patentansprüche haben demgegenüber den Vorteil, dass durch die Anwendung des erfindungsgemäßen Verfahrens einer Vektorquantisierung, ein Codebuch erstellt wird, wobei dieses Codebuch eine optimale Darstellung von möglichen Crashsituationen, im folgenden Klassen genannt, erreicht wird. Diese Klasseneinteilung kann in automatischer Art und Weise berechnet werden. Beruhend auf dieser Klasseneinteilung kann ein auftretendes Crahsignal über ein nachvollziehbares und überprüfbares Ähnlichkeitsmaß einer Klasse zugeordnet und darauf basierend eine Auslöseentscheidung getroffen werden. Der Algorithmus ist, obwohl die Entscheidung außerhalb eines dreidimensionalen Anschauungsraums vollzogen werden kann, aufgrund der erfindungsgemäßen Vorgehensweise leicht zu interpretieren.
Während bei einer Schwellenauswertung lediglich der lokale Zustand ausgewertet wird, d. h. ein Merkmal zum Zeitpunkt T oberhalb oder unterhalb einer bestimmten Schwelle, wird bei dem erfindungsgemäßen Verfahren ein Kriterium verwendet, dass die Eigenschaften des Merkmals über eine ganze vorgegebene Blocklänge berücksichtigen kann. Deswegen ist das Verfahren stabiler gegen sporadische Störsignale im Merkmalssignal, also beispielsweise dem Beschleunigungssignal. Darüber hinaus erlaubt es die Länge der zur Klasseneinteilung verwendeten Merkmalsverläufe, die Daten in einem höher dimensionalen Zusammenhang zu betrachten, wodurch eine Zuordnung in Klassen besser möglich ist.
Der Kern der Erfindung ist ein Verfahren und eine Vorrichtung zur Bildung von Merkmalsvektoren aus Crashsignalen nach dem erfindungsgemäßen Verfahren, zur Erstellung mindestens eines Codebuchs aus den gewonnenen Merkmalsvektoren mittels der Methode der Vektorquantisierung sowie zum Vergleich eines Codebuchs mit einem während eines Fahrereignisses auftretenden Merkmalsvektors, der aus den Sensorsignalen gewonnen wird. In Abhängigkeit von diesem Vergleich erfolgt die Klassifizierung, die dann zur Ansteuerung der Personenschutzmittel, wie Airbag, Gurtstraffer, Überrollbügel und auch Außenschutzmittel wie Außenairbags oder eine anhebbare Fronthaube dient. Der Verlauf des Signals, das von dem Signal der Unfallsensorik abgeleitet wird, kann ein zeitlicher Verlauf sein, es kann jedoch auch ein Verlauf im Vergleich zu einer anderen Variable sein. Beispielsweise kann die Beschleunigung in Abhängigkeit von der Vorverlagerung betrachtet werden. Dass das Signal zur Bildung des Merkmalsvektors vom Signal der Unfallsensorik abgeleitet ist, kann bedeuten, dass es das Signal selbst ist, oder auch ein daraus berechnetes Signal. Ist demnach beispielsweise die Unfallsensorik eine Beschleunigungssensorik und liefert demnach ein Beschleunigungssignal, so kann das abgeleitete Signal das Beschleunigungssignal selbst ein gefiltertes Beschleunigungssignal, ein gemitteltes Beschleunigungssignal oder ein einfach oder zweifach integriertes Beschleunigungssignal sein, wobei Integration hier eine rechentechnisch gemeinte Integration ist. Wahlweise kann auch eine zeitlich gewichtete Mittelwertbildung durchgeführt werden.
Die Klasseneinteilung kann beispielsweise nach Feuern oder Nichtfeuern oder symmetrischer oder unsymmetrischer Unfall einteilen. Es ist jedoch möglich, verschiedene Aufprallgeschwindigkeiten in Intervallen gerastert zu rastern, wobei jedes Geschwindigkeitsintervall einer eigenen Klasse entspricht.
Wie im Folgenden gezeigt wird, kann das Codebuch bereits in einer Applikationsphase, also bevor das Steuergerät an den Autohersteller ausgeliefert wird, erzeugt werden. Die Merkmalsvektoren werden dabei auf dieselbe Art und Weise bestimmt, wie sie später auch im Fahrbetrieb zur Anwendung kommt. In einem Codebuch sind Trainingsdaten enthalten, die gewisse Klassen repräsentieren. Diese Trainingsdaten werden kann mit dem Merkmalsvektor verglichen, um festzustellen, welchen Trainingsdaten und damit welcher Klasse der aktuell bestimmte Merkmalsvektor aus der Messung im Fahrzeug entspricht. Damit ist eine sehr genaue Klassifizierung des Unfalls möglich, und somit eine präzise Ansteuerung der Personenschutzmittel.

Es ist erfindungsgemäß, dass das Codebuch wenigstens zwei Codevektoren aufweist, die dann eine jeweilige Klasse charakterisieren. Der Merkmalsvektor wird, wie oben angegeben, mit den Codevektoren über das Ähnlichkeitsmaß verglichen und als Ähnlichkeitsmaß wird ein Abstandsmaß, wie der euklidische Abstand, verwendet. Die Klassifizierung erfolgt dann nach dem Codevektor, der den geringsten Abstand zum Merkmalsvektor aufweist. Dies ist eine einfach rechentechnisch zu realisierende Lösung, die eine genaue Charakterisierung des Unfallgeschehens ermöglicht.

Durch die in abhängigen Ansprüche aufgeführten Maßnahmen und Weiterbildungen sind vorteilhafte Verbesserungen der in den unabhängigen Patentansprüchen angegebene Vorrichtung zur Ansteuerung von Personenschutzmitteln bzw. des in den unabhängigen Patentansprüchen angegebenen Verfahrens zur Ansteuerung von Personenschutzmitteln möglich.

Besonders vorteilhaft ist, dass der Merkmalsvektor aus einem zeitlichen Verlauf des Signals gebildet wird, beispielsweise aus dem Beschleunigungssignal. Dann repräsentieren die Komponenten des Merkmalsvektors aufeinanderfolgende Zeitpunkte, es entspricht also quasi einer Abtastung des Zeitsignals. Aus dem zeitlichen Verlauf eines Signals kann sehr genau auf den Unfall bezüglich seiner Schwere, seines Typ und der zu erwartenden Folgen geschlossen werden. Alternativ ist es jedoch möglich, dass der Verlauf des Signals auch in Abhängigkeit, wie oben angegeben, von einem weiteren Signal sein kann, wie beispielsweise die Beschleunigung in Abhängigkeit von der Vorverlagerung. Auch dies kann, wie aus dem Stand der Technik bekannt, zu einer präzisen Charakterisierung des Unfallgeschehens genutzt werden.

Dabei ist es vorteilhaft, dass der Verlauf in einem Block vorgegebener Länge zur Bildung des Merkmalsvektors verwendet wird. Dies kann in der Versuchsphase festgestellt werden, welche zeitliche oder andere Länge, je nach Verlaufsabhängigkeit, am geeignetsten ist. Insbesondere können sich die Blöcke bezüglich ihrer zeitlichen Länge überlappen. Dies führt dann ebenfalls zu einer präzisen Charakterisierung des Unfallgeschehens.

In einer vorteilhaften Weiterbildung ist es vorgesehen, dass das Ähnlichkeitsmaß bereits für erste Komponenten eines Merkmalsvektors bestimmt wird, bevor der Merkmalsvektor gebildet wird, also bevor der Verlauf abgeschlossen ist innerhalb des Blocks. Dies ermöglicht dann schon in einer frühen Phase Codebucheintragungen, wie beispielsweise Codevektoren, die bestimmt nicht zu einer Ähnlichkeit führen, also die einen hohen Abstand zum Merkmalsvektor aufweisen, ausgeschlossen werden, so dass die Gesamtrechenzeit damit beschleunigt wird.

Der Vergleich kann vorteilhafter Weise weiter vereinfacht werden, indem der Merkmalsvektor und/oder seine Komponenten in einen Bildbereich transformiert werden. Solch eine Transformation ist eine Vorverarbeitung, die optional ist, wobei dabei ein lineares zeitinvariantes Filter, ein Polynomansatz, eine Spektralanalyse oder eine Waveletanalyse verwendet werden können. Diese Varianten transformieren den eingangsseitig vorliegenden Merkmalsverlauf in einem Bildbereich. Für die ersten Varianten, also der lineare zeitinvariante Filter und der Polynomansatz, ist dieser Bildbereich ein Satz von Parametern, mit dem der Merkmalsvektor am Eingang durch das entsprechende Modell angenähert werden kann. Zur Bestimmung der Parameter bedient man sich den Algorithmen aus der Theorie von Wiener- Filtern. Auch eine Polynomregression ist möglich. Bei der dritten Variante der Spektralanalyse wird der Merkmalsvektor vom Zeitbereich in den Frequenzbereich transformiert, vorzugsweise benutzt man ein Verfahren zur Abschätzung des Leistungsdichte-Spektrums, welches die Anteile an Signalleistung pro Frequenz wiedergibt. Damit ist eine Unabhängigkeit von der Phasenverschiebung im Merkmalsverlauf gegeben. Durch die diskrete Waflettransformation wird, wie bei der spektralen Analyse, der Merkmalsvektor am Eingang in zeit- und frequenzabhängige Anteile zerlegt.

Weiterhin ist es vorteilhaft, dass der Merkmalsvektor sowohl für die Bestimmung der Crashschwere, als auch für die Bestimmung des Crashtyps verwendet wird, um damit eine Ansteuerungsentscheidung zu bilden. Es ist jedoch auch möglich, den Merkmalsvektor dazu zu verwenden, ob es überhaupt zu einer Auslösung kommen kann oder nicht. Dies kann dann insbesondere für eine Plausibilitätsschätzung verwendet werden.

Gemäß des unabhängigen Vorrichtungsanspruchs ist eine Schaltung gemeint, die an die an einem Steuergerät externe Sensoren anschließbar sind, also die sich außerhalb des Steuergeräts befinden, oder es ist eine Schnittstelle gemeint, die sich im Mikrocontroller bzw. Auswerteschaltung befindet, die auch als Software realisiert sein kann. Die Auswerteschaltung ist, wie gesagt, entweder als Mikrocontroller oder als Mikroprozessor oder als ASIC ausgebildet. Die Ansteuerungsschaltung ist eine Zündkreisschaltung, die die Bestromung des Zündelements bzw. bei reversiblen Personenschutzmitteln des Elektormotors oder einer Spule bewirkt.

Das Computerprogramm läuft auf der Auswerteschaltung, also insbesondere auf dem Mikrocontroller, ab. Es kann beispielsweise auf einem EEPROM oder einem anderen maschinenlesbaren Trägern gespeichert sein. Auch eine Speicherung auf Kassette, auf CD, DVD oder anderen magnetooptischen Speichermedien ist möglich. Natürlich ist auch eine Speicherung auf einer Festplatte möglich.

Ausführungsbeispiele der Erfindung sind in der Zeichnung dargestellt und werden in der nachfolgenden Beschreibung näher erläutert.

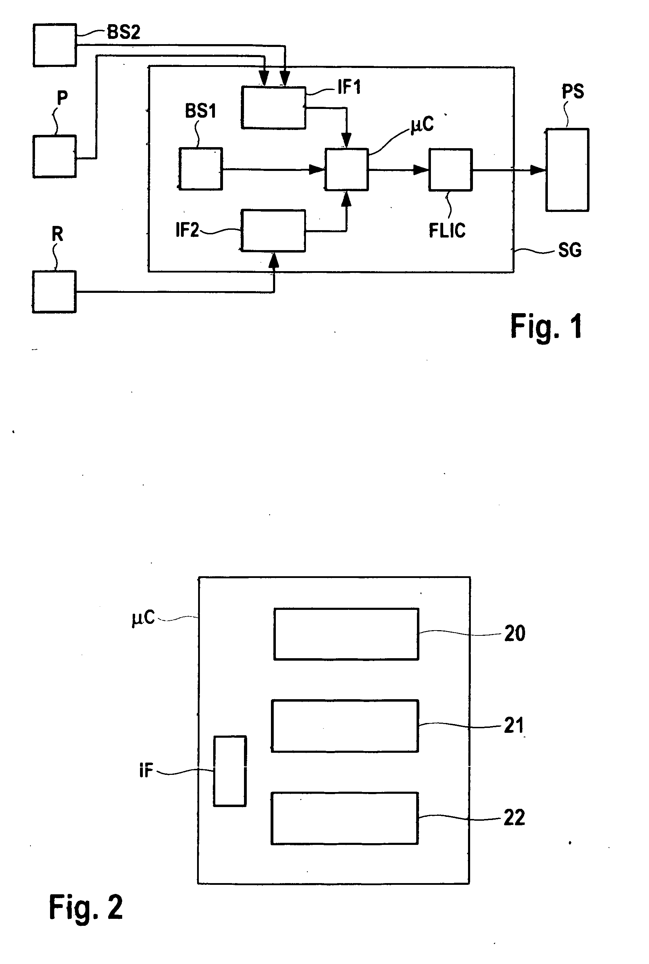

Es zeigen Figur 1 ein Blockschaltbild der erfindungsgemäßen Vorrichtung,
Figur 2 verschiedene Softwareelemente des Mikrocontrollers,

Figur 3 ein Flussdiagramm des erfindungsgemäßen Verfahrens,
Figur 4 ein erstes Signalablaufdiagramm,
Figur 5 ein zweites Signalablaufdiagramm,
Figur 6 verschiedene Blöcke,
Figur 7 ein drittes Signalablaufdiagramm und
Figur 8 ein viertes Signalablaufdiagramm

Bei dem erfindungsgemäßen Verfahren werden zwei Betriebsarten unterschieden:

ein Vorbereitungsschritt zur Erzeugung eines Codebuchs: Das Training mit dem Ziel der Ermittlung der Codevektoren und deren Zusammenfassung zu einem Codebuch. Damit findet die Anpassung des Verfahrens auf ein konkretes Fahrzeugmodell und dessen charakteristischen Merkmalsverläufe statt
Anwendungsschritt zur Klassifikation: Abstandsberechnung mit dem Ziel einer Zuordnung von aktuell bestimmten Merkmalsvektoren zu einer Klasse, d. h. die Anwendung des erfindungsgemäßen Verfahrens bzw. der erfindungsgemäßen Vorrichtung im Fahrzeug.

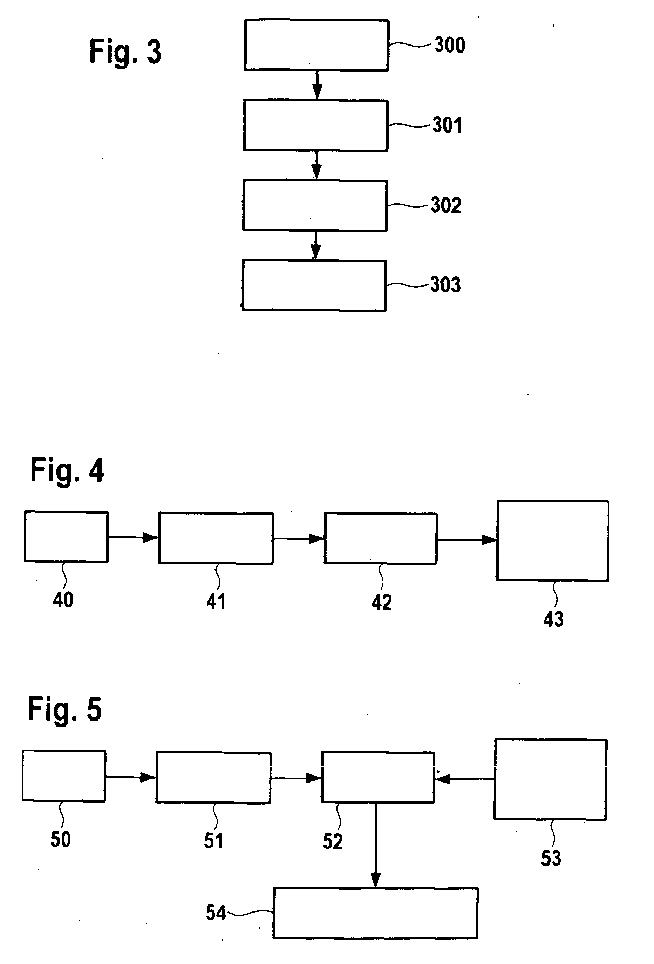

Wie in Figuren 4 und 5 dargestellt ist, entsprechen sich beide Betriebsarten weitgehend. Bevor die eigentliche Vektorquantisierung durchgeführt wird, durchläuft das erfindungsgemäße Verfahren die Einheiten 40 und 41 bzw. 50 und 51, also Merkmatvektorbildung und die Vorverarbeitung.

Anstelle der Vektorquantisierung erfolgt im Anwendungsbereich ein Vergleich des aktuell vorliegenden Merkmalsvektors MV, mit den im Trainingsbetrieb gewonnen quantisierten Codewörtern CV1, ....CVM. Die Zuordnung der Codevektoren zu den N-Klassen ist eindeutig. Damit kann die Anzahl der Klassen N auch kleiner, aber nicht größer sein, als die Anzahl der im Codebuch abgelegten Codewörter, also insbesondere Codevektoren. Durch den Vergleich können die dem vorliegenden Merkmalsvektor MV ähnlichsten Codewörter ermittelt werden, und es können letztlich entsprechend Klassenzugehörigkeiten ausgegeben werden. Figur 4 zeigt bei 42 die Vektorquantisierung und bei 43 die entstehenden Codewörter, also hier die Codevektoren CV1 bis CVM. In Figur 5 wird dagegen anstatt der Veklorquantisierung im Block 52 der Vergleich mit den Eintragungen im Codebuch, also den Codewörtern bzw. Codevektoren CV1 bis CVM durchgeführt. In Abhängigkeit davon wird im Block 54 die Klassifizierung des Merkmalsvektors ausgegeben.

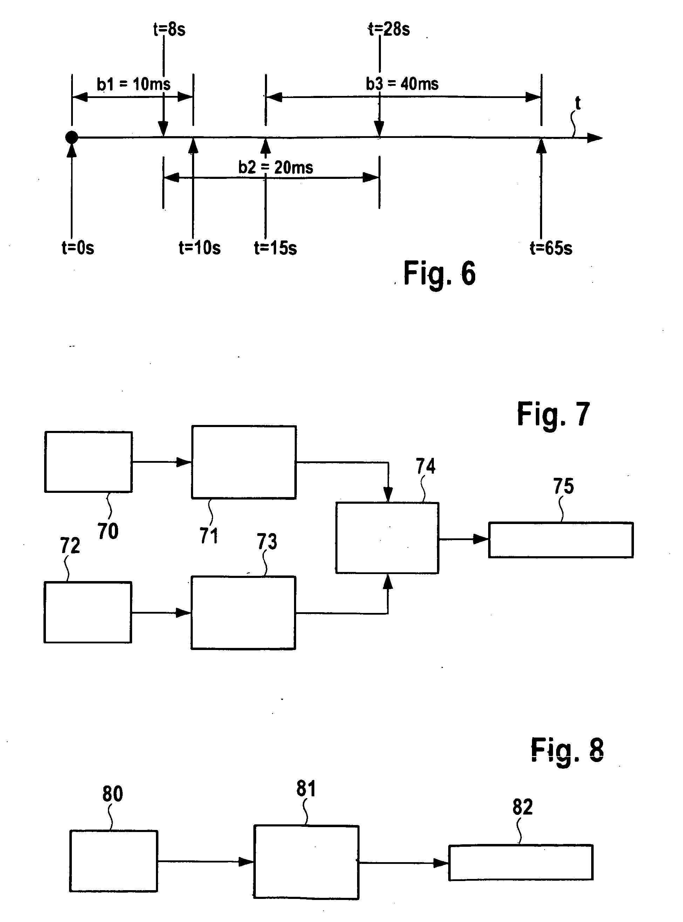

Ein Merkmalsvektor wird gebildet, indem mehrere Werte eines Merkmalverlaufs zu einem Vektor MV zusammengefasst werden. Merkmalsverläufe sind beispielsweise ein Beschleunigungsverlauf, ein Druckverlauf, ein Verlauf einer integrierten Beschleunigung oder einer zweifach integrierten Beschleunigung. Auch Signale einer Umfeldsensorik können hier berücksichtigt werden. Weiterhin sind auch Drehratensignale oder davon abgeleitete Signale möglich. Die Merkmalsverläufe werden in Blöcke eingeteilt, so dass für jeden Block entsprechende Codebuchwörter zu erzeugen sind. Es ist möglich, dass sich die Blöcke überlappen. Wie oben schon angedeutet, können Blöcke nicht nur aus einer Zeitreihe, sondern auch nach entsprechender Variablensubstitution, beispielsweise über eine Deformationsvariable S definiert werden. Figur 6 zeigt beispielhaft eine Eintragung in drei Blöcke B1, B2, B3 über der Zeit. Die Achse t beginnt bei t = 0 Millisekunden. Der erste Block B1 = 10 ms schließt sich daran an, wobei der zweite Block B2 mit einer Länge von 20 ms bereits bei t = 8 ms beginnt, so dass eine Überlappung vorliegt. Der dritte Block beginnt dann bei t = 15ms und hat eine Länge von 40 ms. Auch hier ist eine Überlappung mit dem Block B2 gegeben.

Man geht von einer Trainingsmenge T von M Merkmalsvektoren MV der Blocklänge k aus. Diese Menge lässt sich darstellen als:

$$T = \left\{ MV_1, MV_2, ...., MV_M \right\},$$

wobei jeder Merkmalsvektor $MV_m$ k Dimensionen hat:
$MV_m = (MV_{m,1}, MV_{m,2},..., MV_{m,k})$, wobei m = 1, 2,..., M.
Ziel ist die Erstellung eines Codebuchs CV, welches N Codebuchvektoren enthält. Dies lässt sich darstellen als:

$$C = \left\{ CV_1, CV_2, ..., CV_N \right\},$$

wobei jeder Codebuchvektor wieder k-dimensional ist:
$CVn = (CV_{n,1}, CV_{n,2},..., CV_{n,k})$ mit n = 1, 2,..., N.
Die einzelnen Codebuchvektoren CVn sollen bestimmten Klassen entsprechen, also z. B. fire oder nofire, oder einem bestimmten Crashtyp oder einer anderen auslöserelevanten Einteilung.

Beispiel für ein Codebuch mit fünf Codebuchvektoren mit entsprechender Klassenzuordnung:

$CV_1 \rightarrow$ no crash
$CV_2 \rightarrow$ AZT crash
$CV_3 \rightarrow$ low severity crash
$CV_4 \rightarrow$ medium severity crash
$CV_5 \rightarrow$ high severity crash

Ziel ist nun, ausgehend von T dasjenige Codebuch CV zu finden, in welchem die Codebuchvektoren $CV_N$ die Merkmalsvektoren den Codebuchvektoren so zuordnen, dass man daraus die Klassenzugehörigkeit ableiten kann und gleichzeitig der Codebuchvektor den entsprechenden Merkmalsvektor optimal repräsentiert.
Dies kann auf zwei Arten erzielt werden:

- Iterativ mit der Methode nach Kohonen "Lernende Vektor Quantisierung (LVQ) (detaillierte Beschreibung des Verfahrens in Kohonen: The Self-Organizing Map, Proceedings of the IEEE, Sept. 1990)
- Einmalig nach Vorliegen der Merkmalsvektoren MV aller Trainingsdaten mit dem Verfahren nach Linde, Buzo und Gray (LBG) (detaillierte Beschreibung des Verfahrens in Linde, Buzo, Gray: An Algorithm for Vector Quantizer Design, IEEE Transaction on Communications, Jan. 1980)

Die beiden Algorithmen LVQ und LBG können automatisch betrieben werden. LVQ besitzt den Vorteil, dass dem Algorithmus lediglich ein MV pro Lernschritt zusammen mit der Klassenzugehörigkeit K geliefert werden muss. Bei LBG müssen vorab sämtliche MV gebildet werden und es werden die Codewörter automatisch, d. h. ohne Bekanntgabe der Klassenzugehörigkeit, bestimmt. Es ist noch offen, ob die so bestimmten Codevektoren tatsächlich zu den richtigen Klassen gehören.

Beiden Algorithmen gemeint ist ein vorab zu definierendes Maß zur Bestimmung der Ähnlichkeit zweier Merkmalsvektoren **x**, **y**. Es wird hierzu meistens der euklidische Abstand mit der L2-Norm berechnet:

$$\|x - y\|^2 = (\mathbf{x\text{-}y})^T (\mathbf{x\text{-}y}),$$

wobei der euklidische Abstand die Wurzel aus obiger Vorschrift ist. Möglich sind aber auch andere Abstandsmaße, wie eine der verallgemeinerten Normen $L_N$ oder ein Korrelationsmaß.
Nach Abschluss der VQ (=Vektorquantisierung) steht eine Anzahl von N Codevektoren fest, die tabellarisch als Codebuch in einer Speichereinheit abgelegt werden. Im Betrieb des Algorithmus (d. h. Anwendungsbetrieb) muss dieses Codebuch verfügbar sein. An Stelle der VQ wird nun eine Vergleichsrechnung mit den Codebucheinträgen durchgeführt.
Der Vergleich besteht in einer Abstandsberechnung eines aktuell vorliegenden MV (Merkmalsvektor) mit jedem der N Codebuchvektoren $CV_1$, $CV_2$,...,$CV_N$. Als Abstand wird dasselbe Ähnlichkeitsmaß verwendet, das zur Bestimmung der Codebucheinträge bei der VQ herangezogen wurde.
Derjenige Codebucheintrag wird ausgewählt, der bezüglich des bei der Erstellung des Codebuchs verwendeten Maßes den kleinsten Abstand zum Merkmalsvektor hat. Da jedem Codebucheintrag eine Klasse zugeordnet ist, ist damit eine Klassifizierung erfolgt.
Zur Verringerung des Rechenaufwandes kann auch folgendes Verfahren angewendet werden: Ein Block besteht aus k Einzelmerkmalswerte, die z. B. sukzessiv gemessenen Beschleunigungswerten entsprechen. Nun kann zu jedem Zeitschritt das Abstandsmaß des momentan vorliegenden, noch unvollständigen Blockes (da zur momentanen Zeit t noch nicht alle k MV vorliegen) zu allen CV bestimmt werden, wobei die CV ebenso nur bis t berücksichtigt werden. Nun ist es möglich schon zu einem frühen Zeitpunkt denjenigen CV als Kandidat zu verwerfen, der den größten Abstand zu dem momentanen MV hat. Dieser muss in der weiteren Rechnung nicht mehr berücksichtigt werden, so dass nachfolgende Berechnungen des Abstandsmaßes weniger Aufwand erfordern. Anschaulich entspricht dieses Verfahren dem Vorgehen, dass zunächst die dem vorliegenden Signal am unähnlichsten seienden Klassen verworfen werden. Bis zum Blockende muss im Idealfall lediglich noch zwischen den zwei dem MV ähnlichsten CV entschieden werden.
Das oben beschriebene Verfahren kann als Bestandteil in eine übergeordnete Algorithmusstruktur eingebettet werden. Dabei können die beiden folgenden Varianten in Figuren 7 und 8 verwendet werden. Merkmalsvektoren 70 und 72 werden jeweils unterschiedlichen Algorithmen, und zwar zum einen der Crashschwere 71 und dem Crashtyp 73 zugeführt. Aus den Ergebnissen dieser beiden Algorithmen wird in der Auswerteeinheit 74 dann die Auslöseentscheidung 75 gebildet. Alternativ ist es, oder anstatt, möglich, den Merkmalsvektor 80 einem Algorithmus zuzuführen, der entscheidet, ob es ein Auslösefall ist oder nicht. Damit wird dann die Entscheidung gebildet, ob die Auslösung stattfinden soll oder nicht, wie das in Block 82 geschieht. Diese Version kann auch zur Plausibilisierung verwendet werden. Weitere Einbettungen sind möglich.

Ein Beispiel für einen MV, wie er im bisher beschriebenen VQ Kernalgorihtmus verwendet werden kann, ist z. B. nachstehender Vektor $a_{MV}$ (b), der insgesamt k Werte des Beschleunigungsverlaufes a zu einem Block b zusammenfasst:

$$a_{MV}(b) = \begin{bmatrix} a(1) \\ a(2) \\ ... \\ a(k) \end{bmatrix}$$

Die Auswahl eines der unter Abschnitt Stand der Technik gelisteten Merkmale zur Bildung eines MV ist mit dem beschriebenen VQ Verfahren nicht auf ein einzelnes Merkmal beschränkt.

Eine erste Alternative besteht darin, für jedes Merkmal einzeln die VQ durchzuführen und alle gefundenen Codevektoren im Codebuch abzulegen.

Eine weitere Möglichkeit ist es, mehrere Spaltenvektoren gleicher Dimension zu einem zweidimensionalen Feld $x_{MV}$(b) anzuordnen.

$$x_{MV}(b) = \quad m_{11} = a(1) \qquad m_{21} = dv(1) \quad ... \quad m_{1l}$$

$$m_{21} = a(2) \qquad m_{22} = dv(2) \quad ... \quad m_{2l}$$

$$m_{kl} = a(k) \qquad m_{k2} = dv(k) \qquad m_{kl}$$

Die mathematische Form der Matrix $x_{MV}(b)$ ist ähnlich zu einer bei der Bildverarbeitung auftretenden Form. Die Matrix $x_{MV}(b)$ entspricht dann bei der Bildverarbeitung einem rechteckförmigen Ausschnitt einer Bilddatei; die einzelnen Werte der Matrix sind dann Pixel. Demgemäß können die bei der Bildverarbeitung entwickelten Erweiterungen der VQ entsprechend in ähnlicher Form im ganz anderen Gebiet der Crashsensierung genutzt werden (siehe Nasrabadi, King: Image Coding Using Vector Quantization: A Review, IEEE Transaction on Communications, August 1988). Es kann die VQ gleichzeitig in beiden Dimensionen, also entlang der Verlaufsvariable (vertikal) und über alle Variablen (horizontal) angewendet werden.

Ähnlichkeitsbestimmung:

Neben der durch den euklidischen Abstand definierten Ähnlichkeit gibt es eine Reihe von sinnvollen Erweiterungen, die ebenfalls für die Crashsignalauswertung anwendbar sind (siehe Karayiannis, Randolph-Gips: Soft-Learning Vector Quantization and Clustering Algorithms Based on Non-Euclidean Norms: Single-Norm Algorithms, IEEE Transactions on Neural Networks, März 2003, P. Y. Simard, Y. L. LeCun, and J. S. Denker, "Memory-based character recognition using a transformation invariant metric," in IEEE Inter. Conf. on Pattern Recog., pp. 262-267, 1994.

Fig. 1 zeigt ein Blockschaltbild mit der erfindungsgemäßen Vorrichtung. Ein Steuergerät SG, das zur Ansteuerung von Personenschutzmitteln PS verwendet wird, weist als zentrales Element einen Mikrocontroller μC auf. Anstatt eines Mikrocontrollers kommen auch andere Auswerteschaltungen wie Mikroprozessoren oder ASICs in Frage. Dem Mikrocontroller ist ein nicht dargestellter Speicher zugeordnet, der Bereiche aufweist, die entweder eine dauerhafte oder eine flüchtige Speicherung von Daten erlauben. Dauerhaft ist beispielsweise das Codebuch abgespeichert. Flüchtig sind aktuelle Messergebnisse oder Zwischenergebnisse des erfindungsgemäßen Verfahrens abgespeichen.

Der Mikrocontrollers μC erhält Daten zur Verarbeitung von zwei Schnittstellen IF1 und IF2 sowie von einer Beschleunigungssensonik BS1. Die Schnittstellen IF1 und IF2 sind vorliegend integrierte Schaltkreise, an die außerhalb des Steuergeräts angeordnete Sensoren P, BS2 und R angeschlossen sind. Dazu sind vorliegend Punkt-zu-Punkt-Verbindungen vorgesehen, über die zusätzlich eine Energieversorgung der Sensoren P, BS2 und R implementiert sein kann. Alternativ ist eine Busverbindung oder eine Funkverbindung möglich.

Die Sensoren BS1 und BS2 sind Beschleunigungssensoren, die in eine oder mehrere Richtungen empfindlich sein können. Sie sind mikromechanisch aufgebaut, wobei eine auftretende Beschleunigung oder Verzögerung zu einer Bewegung einer mikromechanisch hergestellten Struktur führt, die sich in einer Kapazitätsänderung ausdrückt. Eine solche Kapazitätsänderung kann dann in eine Spannung umgesetzt werden, die verstärkt und digitalisiert wird. Die externen Sensoren senden dann digitale Signale an die Schnittstellen IF1 und IF2. Die interne Beschleunigungssensorik BS1 überträgt vorliegend ihre Daten analog zu einem Analog-Digital-Wandler im Mikrocontroller µC. Alternativ ist auch eine Digitalübertragung mit dann einem externen Analog-Digital-Wandler möglich.

Die Drucksensorik P ermöglicht eine Seitenaufprallsensierung über die Messung eines vorwiegend adiabatischen Druckanstiegs. Die Drucksensorik P ist daher vorwiegend in den Seitenteilen des Fahrzeugs angeordnet. Es sind dabei mindestens zwei Drucksensoren vorgesehen.

Die Umfeldsensorik R überwacht das Umfeld des Fahrzeugs mit einer Radar- und/oder Video- und/oder Ultraschall- und/oder Lidarsensorik. Auch ein Photonic Mixing Device ist möglich. Die Umfeldsensorik ist an der Peripherie des Fahrzeugs angeordnet.

In Abhängigkeit von diesen Sensorsignalen und ggfs. weiteren Signalen bestimmt der Mikrocontroller µC in der erfindungsgemäßen Weise, ob ein Ansteuerungssignal an die Zündkreisschaltung FLIC übertragen wird. Für die Übertragung wird vorliegend der sogenannte SPI-Bus (Serial-Peripherial-Interface-Bus) verwendet. Die Zündkreisschaltung FLIC ist vorliegend ein integrierter Schaltkreis mit mehreren Schaltelementen, die betätigt werden, um die Personenschutzmittel PS zu bestromen. Es ist möglich, dass eine Mehrzahl von integrierten Schaltkreisen verwendet wird. Auch diskrete Elemente können verwendet werden. Die Zündkreisschaltung kann insbesondere eine Logik aufweisen, um beispielsweise das Ansteuersignal durch eine redundante Sensorauswertung freizugeben.

Der Einfachheit halber sind andere für die Funktion des Steuergeräts SG notwendige, aber für das Verständnis der Erfindung nicht erforderliche Bauelemente wie ein Energiespeiche oder weitere Sensoren oder ein Sicherheitshalbleiter zur Überwachung der Sensorsignale und des Mikrocontrollers µC nicht dargestellt.

Der Mikrocontroller µC erhält die Sensorsignale und bildet aus diesen Signalen den Merkmalsvektor. Der Merkmalsvektor wird dann mittels eines Abstandmaßes mit den Vektoren im Codebuch verglichen, wobei diese Vektoren im Steuergerät dauerhaft abgespeichert sind. Den Vektoren aus dem Codebuch ist vorliegend jeweils eine Klasse zugeordnet, so dass der Vektor, der dem Merkmalsvektor am nächsten kommt, die Klassifizierung des Merkmalsvektors bestimmt. Anhand der Klassifizierung bestimmt der Mikrocontroller µC, ob und welche Personenschutzmittel PS anzusteuern sind. Dieses Ansteuersignal wird dann zur Zündkreisschaltung FLIC übertragen und führt zur Ansteuerung der Personenschutzmittel PS.

Fig. 2 zeigt schematisch eine Auswahl von Softwaremodulen, die der Mikrocontroller µC erfindungsgemäß benutzt. Mittels eines Softwaremoduls oder -komponente 20 wird der Merkmalsvektor aus den Sensorsignalen gebildet. Als weitere Softwarekomponente ist die Klassifizierung 21 angegeben. Die Klassifizierung führt den Vergleich des Merkmalsvektors oder des in den Bildbereich transformierten Merkmalsvektors mit den Eintragungen im Codebuch durch. In Abhängigkeit von dem Vergleich der wie oben angegeben beispielsweise in einer Abstandsbestimmung sich ausdrückt, wird dann die Klassifizierung vorgenommen. Die Komponente 22 führt dann die Ansteuerung durch und erzeugt das Ansteuerungssignal, das an die Ansteuerungsschaltung FLIC übertragen wird. Eine Schnittstelle IF ist hier beispielhaft als Softwarekomponente ausgeführt, sie wird beispielsweise zur Aufnahme der Signale vom Sensor BS1 verwendet. Weitere Softwarekomponenten, wie beispielsweise die Vorverarbeitung, sind möglich. Die Software kann in bekannten Programmiersprachen geschrieben sein, beispielsweise in einer objektorientierten Sprache wie C++.

Figur 3 erläutert das erfindungsgemäße Verfahren in einem Flussdiagramm. In Verfahrensschritt 300 wird aus dem Verlauf des Signals oder eines davon abgeleiteten Signals ein Merkmalsvektor gebildet. Dieser wird in Verfahrensschritt 301 in einen Bildbereich transformiert, beispielsweise mittels einer diskreten Wafelet-Transformation. Im Verfahrensschritt 302 erfolgt dann der Vergleich mit den Codebucheintragungen. Dabei ist es zusätzlich möglich, dass der Vergleich bereits vorher einsetzt, und zwar während der Merkmalsvektor aufgefüllt wird. Dies kann jedoch auch danach geschehen, und zwar wird der Abstand nicht mit allen Komponenten bestimmt, sondern mit weniger Komponenten, um so die entfernteren Eintragungen im Codebuch, wie Codevektoren, bereits ausschließen zu können. Im Verfahrensschritt 303 wird dann in Abhängigkeit von der Klassifizierung, die in Abhängigkeit vom Vergleich durchgeführt wurde, ein Ansteuerungssignal erzeugt.

**Patentansprüche**

1. Verfahren zur Ansteuerung von Personenschutzmitteln (PS) mit folgenden Verfahrensschritten:

   - Bildung eines Merkmalsvektors aus einem Verlauf eines von einem ersten Signal einer Unfallsensorik (BS, P, R) abgeleiteten zweiten Signal (300)

- Klassifizierung des mindestens einen Merkmalvektors in Abhängigkeit von einem ersten Vergleich des mindestens einen Merkmalvektors mit wenigstens einem ersten Codebuch mittels eines Ähnlichkeitsmaßes (302)

- Ansteuerung der Personenschutzmittel (PS) in Abhängigkeit von der Klassifizierung (303), **dadurch gekennzeichnet, dass** das wenigstens eine Codebuch wenigstens zwei Codevektoren aufweist, wobei jedem Codevektor eine jeweilige Klasse zugeordnet ist, dass der mindestens eine Merkmalsvektor mit den wenigstens zwei Codevektoren derart verglichen wird, dass als das Ähnlichkeitsmaß ein Abstandsmaß zwischen dem Merkmalsvektor und den wenigstens zwei Codevektoren verwendet wird, wobei die Klassifizierung in Abhängigkeit von dem Codevektor erfolgt, der den geringsten Abstand zum mindestens einen Merkmalsvektor aufweist, wobei die wenigstens zwei Codevektoren durch eine Methode der Vektorquantisierung erstellt werden.

2. Verfahren nach Anspruch 1, **dadurch gekennzeichnet, dass** der mindestens eine Merkmalsvektor aus einem zeitlichen Verlauf des zweiten Signals gebildet wird.

3. Verfahren nach Anspruch 1, **dadurch gekennzeichnet, dass** der mindestens eine Merkmalsvektor aus einem Verlauf des zweiten Signals in Abhängigkeit von einem dritten Signal gebildet wird, wobei das dritte Signal aus dem ersten Signal abgeleitet wurde.

4. Verfahren nach Anspruch 1, 2 oder 3, **dadurch gekennzeichnet, dass** der Verlauf in einen Block vorgegebener Länge zur Bildung des Merkmalsvektors verwendet wird.

5. Verfahren nach Anspruch 4, **dadurch gekennzeichnet, dass** das Ähnlichkeitsmaß bereits für Komponenten des mindestens einen Merkmalsvektors bestimmt wird, bevor der ganze Block zur Bildung des Merkmalsvektors verwendet wird und dass eine Eintragung des wenigstens einen Codebuchs für die Klassifizierung verworfen wird, die die geringste Ähnlichkeit aufweist.

6. Verfahren nach einem der vorherigen Ansprüche, **dadurch gekennzeichnet, dass** der mindestens eine Merkmalsvektor oder seine Komponenten vor dem Vergleich in einen Bildbereich transformiert werden (301).

7. Verfahren nach einem der vorhergehenden Ansprüche, **dadurch gekennzeichnet, dass** durch einen zweiten Vergleich des mindestens einen Merkmalsvektors mit einem zweiten Codebuch durch die Klassifizierung eine Crashschwere bestimmt wird, das durch einen dritten Vergleich des mindestens einen Merkmalsvektors mit einem dritten Codebuch durch die Klassifizierung ein Crashtyp bestimmt wird, wobei in Abhängigkeit von der Crashschwere und dem Crashtyp die Ansteuerungsentscheidung getroffen wird.

8. Verfahren nach einem der vorhergehenden Ansprüche, **dadurch gekennzeichnet** durch einen vierten Vergleich des mindestens einen Merkmalsvektors mit einem vierten Codebuch durch die Klassifizierung bestimmt wird, ob es zu einer Auslösung kommen kann.

9. Vorrichtung zur Ansteuerung von Personenschutzmitteln (PS) mit:

- einer Schnittstelle (IF1, IF2), an die eine Unfallsensorik (BS) anschließbar ist, wobei die Unfallsensorik (BS) ein erstes Signal erzeugt

- eine Auswerteschaltung ($\mu$C), die mit der Schnittstelle (IF1, IF2) verbunden ist und die in Abhängigkeit von einem Verlauf von vom ersten Signal abgeleiteten zweiten Signal mindestens einen Merkmalsvektor bildet und dem mindestens einen Merkmalsvektor in Abhängigkeit von einem Vergleich des mindestens einen Merkmalsvektors mit wenigstens einem Codebuch mittels eines Ähnlichkeitsmaßes klassifiziert

- einer Ansteuerungsschaltung (FLIC), die derart mit der Auswerteschaltung ($\mu$C) verbunden ist, dass die Ansteuerungsschaltung (FLIC) die Personenschutzmittel (PS) in Abhängigkeit von einem Ansteuerungssignal von der Auswerteschaltung ($\mu$C) ansteuert, wobei die Auswerteschaltung des Ansteuerungssignals in Abhängigkeit von der Klassifizierung erzeugt, **dadurch gekennzeichnet, dass** das wenigstens eine Codebuch wenigstens zwei Codevektoren aufweist, wobei jedem Codevektor eine jeweilige Klasse zugeordnet ist, dass der mindestens eine Merkmalsvektor mit den wenigstens zwei Codevektoren derart verglichen wird, dass als das Ähnlichkeitsmaß ein Abstandsmaß zwischen dem Merkmalsvektor und den wenigstens zwei Codevektoren verwendet wird, wobei die Klassifizierung in Abhängigkeit von dem Codevektor erfolgt, der den geringsten Abstand zum mindestens einen Merkmalsvektor aufweist, wobei die wenigstens zwei Codevektoren durch eine Methode der Vektorquantisierung erstellt werden.

10. Computerprogrammprodukt mit Programmcode, der auf einem maschinenlesbaren Träger gespeichert ist zur Durchführung des Verfahrens nach einem der Ansprüche 1 bis 8, wenn das Programm auf einem Steuergerät ausgeführt wird.

**Claims**

1. Method for actuating personal protection means (PS), having the following method steps:

   - forming a feature vector from a profile of a second signal (300) derived from a first signal of an accident sensor system (BS, P, R),
   - classifying the at least one feature vector as a function of a first comparison of the at least one feature vector with at least a first code book by means of a similarity measure (302), and
   - actuating the personal protection means (PS) as a function of the classification (303), **characterized in that** the at least one code book has at least two code vectors, each code vector being assigned a respective class, and **in that** the at least one feature vector is compared with the at least two code vectors in such a way that a distance measure between the feature vector and the at least two code vectors is used as the similarity measure, the classification being performed as a function of the code vector which is at the shortest distance from the at least one feature vector, the at least two code vectors being produced by a method of vector quantization.

2. Method according to Claim 1, **characterized in that** the at least one feature vector is formed from a time profile of the second signal.

3. Method according to Claim 1, **characterized in that** the at least one feature vector is formed from a profile of the second signal as a function of a third signal, the third signal being derived from the first signal.

4. Method according to Claim 1, 2 or 3, **characterized in that** the profile is used in a block of prescribed length in order to form the feature vector.

5. Method according to Claim 4, **characterized in that** the similarity measure is already determined for components of the at least one feature vector before the entire block is used in order to form the feature vector, and **in that** an entry of the at least one code book is rejected for the classification which has the least similarity.

6. Method according to one of the preceding claims, **characterized in that** the at least one feature vector or its components are transformed (301) into an image region before the comparison.

7. Method according to one of the preceding claims, **characterized in that**, with the aid of a second comparison of the at least one feature vector with a second code book, a crash severity is determined by the classification, and **in that**, with the aid of a third comparison of the at least one feature vector with a third code book, a crash type is determined by the classification, the actuation decision being taken as a function of the crash severity and the crash type.

8. Method according to one of the preceding claims, **characterized in that**, with the aid of a fourth comparison of the at least one feature vector with a fourth code book, it is determined by the classification whether triggering can come about.

9. Device for actuating personal protection means (PS) having:

   - an interface (IF1, IF2) to which an accident sensor system (BS) can be connected, the accident sensor system (BS) generating a first signal,
   - an evaluation circuit ($\mu$C) which is connected to the interface (IF1, IF2) and which forms at least one feature vector as a function of a profile of a second signal derived from the first signal, and classifies the at least one feature vector as a function of a comparison of the at least one feature vector with at least one code book by means of a similarity measure, and
   - an actuation circuit (FLIC) which is connected to the evaluation circuit ($\mu$C) in such a way that the actuation circuit (FLIC) actuates the personal protection means (PS) as a function of an actuation signal from the evaluation circuit ($\mu$C), the evaluation circuit generating the actuation signal as a function of the classification, **characterized in that** the at least one code book has at least two code vectors, each code vector being assigned a respective class, and **in that** the at least one feature vector is compared with the at least two code vectors in such a way that a distance measure between the feature vector and the at least two code vectors is used as the similarity measure, the classification being performed as a function of the code vector which is at the shortest distance from the at least one feature vector, the at least two code vectors being produced by a method of vector quantization.

10. Computer program product having program code, which is stored on a machine-readable carrier, for carrying out the method according to one of Claims 1 to 8 when the program is executed on a control unit.

## Revendications

1. Procédé de commande de moyens (PS) de protection des personnes, qui présente les étapes suivantes :

   - former un vecteur caractéristique à partir de l'évolution d'un deuxième signal (300) dérivé d'un premier signal d'un ensemble (BS, P, R) de détecteurs de collision,
   - classer le ou les vecteurs caractéristiques en fonction d'une première comparaison du ou des vecteurs caractéristiques avec au moins un premier livre de codes, au moyen d'un niveau de similitude (302),
   - commander les moyens (PS) de protection des personnes en fonction du classement (303),
   **caractérisé en ce que**
   le ou les livres de codes présentent au moins deux vecteurs de code, une classe étant associée à chaque vecteur de code et
   **en ce que** le ou les vecteurs caractéristiques sont comparés aux deux ou plus de deux vecteurs de code en utilisant comme niveau de similitude un niveau de distance entre le vecteur caractéristique et les deux ou plus de deux vecteurs de code, le classement s'effectuant en fonction du vecteur de code qui présente la plus petite distance par rapport au vecteur ou aux vecteurs caractéristiques, les deux ou plus de deux vecteurs de code étant formés par un procédé de quantification vectorielle.

2. Procédé selon la revendication 1, **caractérisé en ce que** le ou les vecteurs caractéristiques sont formés de l'évolution temporelle du deuxième signal.

3. Procédé selon la revendication 1, **caractérisé en ce que** le ou les vecteurs caractéristiques sont formés de l'évolution du deuxième signal en fonction d'un troisième signal, le troisième signal ayant été dérivé du premier signal.

4. Procédé selon les revendications 1, 2 ou 3, **caractérisé en ce que** l'évolution est utilisée dans un bloc de longueur prédéterminée pour former le vecteur caractéristique.

5. Procédé selon la revendication 4, **caractérisé en ce que** le niveau de similitude est déjà déterminé pour des composants du ou des vecteurs caractéristiques avant d'utiliser l'ensemble du bloc pour former les vecteurs caractéristiques et **en ce que** l'introduction du ou des livres de codes est rejetée pour le classement qui présente la plus petite similitude.

6. Procédé selon l'une des revendications précédentes, **caractérisé en ce que** le ou les vecteurs caractéristiques ou ses composantes sont transformés (301) en une zone d'image avant la comparaison.

7. Procédé selon l'une des revendications précédentes, **caractérisé en ce qu'**à l'aide d'une deuxième comparaison entre le ou les vecteurs caractéristiques et un deuxième livre de codes, la gravité d'une collision est déterminée par classement, et **en ce qu'**un type d'accident est déterminé par le classement à l'aide d'une troisième comparaison entre le ou les vecteurs caractéristiques et un troisième livre de codes, la décision d'activation étant prise en fonction de la gravité de l'accident et du type d'accident.

8. Procédé selon l'une des revendications précédentes, **caractérisé en ce qu'**à l'aide d'une quatrième comparaison entre le ou les vecteurs caractéristiques et un quatrième livre de codes, on détermine par l'intermédiaire du classement si une activation doit avoir lieu.

9. Dispositif de commande de moyens (PS) de protection des personnes, qui présente :

   - une interface (IF1, IF2) à laquelle un ensemble (BS) de détecteurs d'accident peut être raccordé, l'ensemble (BS) de détecteurs d'accident produisant un premier signal,

- un circuit d'évaluation (μC) relié à l'interface (IF1, IF2), formant au moins un vecteur caractéristique en fonction de l'évolution d'un deuxième signal dérivé du premier signal et classant le ou les vecteurs caractéristiques en fonction d'une comparaison entre le ou les vecteurs caractéristiques et au moins un livre de codes au moyen d'un niveau de similitude,

- un circuit de commande (FLIC) relié au circuit d'évaluation (μC) de telle sorte que le circuit de commande (FLIC) commande les moyens (PS) de protection des personnes en fonction d'un signal de commande du circuit d'évaluation (μC), le circuit d'évaluation formant le signal de commande en fonction du classement, **caractérisé en ce que**

le ou les livres de codes présentent au moins deux vecteurs de code, une classe étant associée à chaque vecteur de code,

**en ce qu'**au moins un vecteur caractéristique est comparé aux deux ou plus de deux vecteurs de code en utilisant comme niveau de similitude un niveau de distance entre le vecteur caractéristique et les deux ou plus de deux vecteurs de code,

**en ce que** le classement est réalisé en fonction du vecteur de code qui présente la plus petite distance par rapport au vecteur ou aux vecteurs caractéristiques et

**en ce que** les deux ou plus de deux vecteurs de code sont formés par un procédé de quantification vectorielle.

**10.** Produit de programme informatique doté de codes de programme et conservé sur un support lisible par machine en vue de l'exécution du procédé selon l'une des revendications 1 à 8 lorsque le programme est exécuté sur un appareil de commande.

Fig. 1

Fig. 2

**Fig. 3**

300

301

302

303

**Fig. 4**

40    41    42    43

**Fig. 5**

50    51    52    53

54

Fig. 6

Fig. 7

Fig. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10360893 A1

**In der Beschreibung aufgeführte Nicht-Patentliteratur**

- **Kohonen.** The Self-Organizing Map. *Proceedings of the IEEE,* September 1990
- **Linde ; Buzo ; Gray.** An Algorithm for Vector Quantizer Design. *IEEE Transaction on Communications,* Januar 1980
- **Nasrabadi, King.** Image Coding Using Vector Quantization: A Review. *IEEE Transaction on Communications,* August 1988
- **Karayiannis ; Randolph-Gips.** Soft-Learning Vector Quantization and Clustering Algorithms Based on Non-Euclidean Norms: Single-Norm Algorithms. *IEEE Transactions on Neural Networks,* Marz 2003
- **P. Y. Simard ; Y. L. LeCun ; J. S. Denker.** Memory-based character recognition using a transformation invariant metric. *IEEE Inter. Conf. on Pattern Recog.,* 1994, 262-267